# EUROPEAN PATENT SPECIFICATION

(11) **EP 3 946 701 B1**
(45) Date of publication and mention of the grant of the patent: **07.06.2023**
(21) Application number: 20788822.3
(22) Date of filing: 14.10.2020
(51) Int. Cl.: B01D 67/00, B01D 69/14, B01D 69/08

(54) **METHOD FOR THE MANUFACTURE OF A MEMBRANE SYSTEM**
VERFAHREN ZUR HERSTELLUNG EINES MEMBRANSYSTEMS
PROCÉDÉ DE FABRICATION D'UN SYSTÈME À MEMBRANE

(30) Priority: 16.10.2019 EP 19203626
(43) Date of publication of application: 09.02.2022
(73) Proprietor: DWI - Leibniz-Institut für Interaktive Materialien e.V., 52056 Aachen (DE)
(72) Inventor: GROSSKURTH, Johannes, 52062 Aachen (DE); KATHER, Michael, 71336 Waiblingen (DE); PICH, Andrij, 52134 Herzogenrath (DE); ROTH, Hannah, 52062 Aachen (DE); WESSLING, Matthias, 52074 Aachen (DE); WOLFF, Hanna, 52064 Aachen (DE)
(74) Representative: Müller-Boré & Partner Patentanwälte PartG mbB
(86) International application number: PCT/EP2020/078911
(87) International publication number: WO 2021/074229

(56) References cited:
- WO-A1-2017/045983
- WO-A2-2006/099078
- CN-A- 106 268 376
- US-A1- 2016 303 517
- HAI-FENG JI ET AL: "Engineering of hemocompatible and antifouling polyethersulfone membranes by blending with heparin-mimicking microgels", BIOMATERIALS SCIENCE, vol. 5, no. 6, 1 January 2017 (2017-01-01) , pages 1112-1121, XP055682843, GB ISSN: 2047-4830, DOI: 10.1039/C7BM00196G
- JI HAI-FENG ET AL: "Multifunctionalized polyethersulfone membranes with networked submicrogels to improve antifouling property, antibacterial adhesion and blood compatibility", MATERIALS SCIENCE AND ENGINEERING C, vol. 96, 27 November 2018 (2018-11-27), pages 402-411, XP085569821, ISSN: 0928-4931, DOI: 10.1016/J.MSEC.2018.11.047
- ZHANG JIE ET AL: "In-situmodification of PVDF membrane during phase-inversion process using carbon nanosphere sol as coagulation bath for enhancing anti-fouling ability", JOURNAL OF MEMBRANE SCIENCE, ELSEVIER BV, NL, vol. 526, 23 December 2016 (2016-12-23), pages 272-280, XP029886219, ISSN: 0376-7388, DOI: 10.1016/J.MEMSCI.2016.12.044
- BARTH M ET AL: "Monolayer microgel composite membranes with tunable permeability", JOURNAL OF MEMBRANE SCIENCE, ELSEVIER BV, NL, vol. 555, 28 March 2018 (2018-03-28), pages 473-482, XP085382545, ISSN: 0376-7388, DOI: 10.1016/J.MEMSCI.2018.03.037
- 2014 Wiley-Vch ET AL: "Supporting Information Temperature-Modulated Water Filtration Using Microgel- Functionalized Hollow-Fiber Membranes**", , 16 April 2014 (2014-04-16), pages 1-4, XP055839185, Retrieved from the Internet: URL:https://onlinelibrary.wiley.com/action /downloadSupplement?doi=10.1002/anie.20140 0316&file=anie_201400316_sm_miscellaneous_ information.pdf [retrieved on 2021-09-08]

## Description

The present invention relates to a method for the manufacture of a membrane system including a porous membrane formed from a first polymer and particles of at least one second polymer different from the first polymer.

Porous membranes formed from polymers can be used to separate molecular and colloidal matter in liquid or gaseous mixtures. Membranes are applied in the chemical and food industry, medicine and in the production of drinking water and treatment of industrial wastewater.

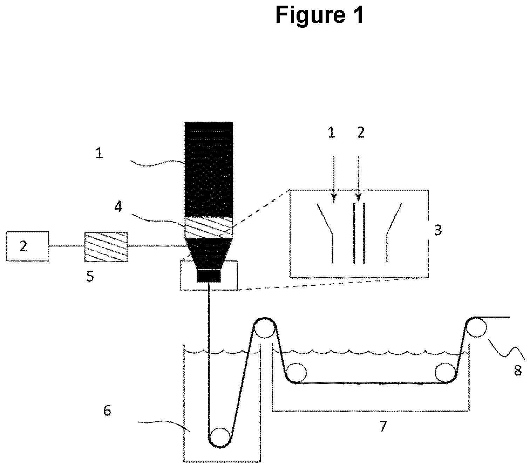

Membranes can be fabricated in different forms. Most common are flat sheet membranes and membranes with tubular geometries (hollow fibers, capillary membranes, tubular membranes). A scheme of a hollow fiber spinning process by non-solvent induced phase inversion, which can be used to form a membrane having a tubular geometry, is shown in Figure 1.

Typically, polymeric membranes are formed from a membrane-forming polymer like PES, PSF, PVDF etc. Water-soluble pore forming additives can be added to the membrane-forming polymer to increase the porosity and hydrophilicity of the resulting membrane. Such additives are e.g. PVP, glycerol, PEG, LiCl etc. Due to their water-solubility, these additives normally leach out of the membrane. Therefore, the hydrophilicity of the membrane material decreases with increasing operation time.

When the membrane is used for performing a purification of a feed solution including impurities, the rejected matter accumulates in high concentration towards the membrane surface. The concentration of the retained components is much higher at the membrane surface compared to the components which can permeate the membrane. This phenomenon is called concentration polarization. Especially in separation processes involving water as a solvent, strong interaction of these rejected components with the membrane surface is likely to happen and highly undesirable. The term "fouling" describes this interaction of components in the feed solution with the membrane material and the membrane surface. Many of these components, so-called foulants, are hydrophobic and a hydrophobic membrane material accelerates the creation of a fouling layer. In many membrane processes, fouling is the reason for a major performance loss observed as a loss in productivity.

Generally, material improvements for increasing the operation time of membrane modules are desired. Therefore, additives increasing the long-term hydrophilicity of membrane materials, decreasing fouling, improving the high-performance operation time, decreasing cleaning need, offering better biocompatibility and optionally at the same time effecting better selectivity or unique features due to switchability are researched. Thus, polymeric membranes with one or more of the above-mentioned features are highly desired. Further, scalable methods of fabricating these polymeric membranes are also desired. A need exists for membranes having improved hydrophilicity, wettability, anti-fouling behavior, blood compatibility, and/or stable performance properties. Materials Science & Engineering C 96 (2019) 402-411 describes a membrane system having fouling resistance and including a high amount of particles of a copolymer of acrylic acid and N-vinyl-2-pyrrolidone. However, the copolymer is incorporated at large amounts into the membrane system and producing the copolymer requires extensive efforts and increases the cost for producing the membrane system.

HAI-FENG JI ET AL: "Engineering of hemocompatible and antifouling polyethersulfone membranes by blending with heparin-mimicking microgels",BIOMATERIALS SCIENCE, vol. 5, no. 6, 1 January 2017 (2017-01-01), pages 1112-1121, US 2016/303517 A1, WO 2006/099078 A2, WO 2017/045983 A1 and BARTH M ET AL: "Monolayer microgel composite membranes with tunable permeability", JOURNAL OF MEMBRANE SCIENCE, ELSEVIER BV, NL, vol. 555, 28 March 2018 (2018-03-28), pages 473-482 disclose membrane systems.

In view of the above, the technical problem underlying the present invention is to provide a feasible method for manufacturing a membrane system including a porous membrane formed from a first polymer and particles of at least one second polymer, wherein the membrane system should have a high fouling resistance and optionally switchability/response behavior, while being obtainable with reasonable efforts.

The solution to the above technical problem is achieved by providing the embodiments characterized in the claims.

In particular, the present invention relates to method for forming a membrane system having the form of a flat sheet or a tube, including
(a) a porous membrane formed from at least one first polymer; and
(b) particles of at least one second polymer different from the first polymer,

wherein the porous membrane (a) has the particles (b) immobilized,
wherein the at least one second polymer includes units (I) which are formed by polymerizing N-vinylcaprolactam, and
the weight ratio of the particles (b) is at most 15 wt%, based on the total weight of the porous membrane (a) and the particles (b), the weight ratio of the particles (b) referring to the solid weight of the particles (b) and being determined by thermogravimetric analysis,
said method comprising the steps of
   (i) providing a polymer solution containing the at least one first polymer;
   (ii) providing a coagulation bath;
   (iii) optionally providing a bore solution;
   (iv) shaping the polymer solution into a predetermined form of a flat sheet or a tube; and
   (v) immersing the polymer solution having the predetermined form into the coagulation bath;
to coagulate the porous membrane (a) having the immobilized particles (b);
wherein the coagulation bath and/or the bore solution, if provided, contains the particles (b) at least at the time of step (v).

Accordingly, in the course of the present invention, there is provided a membrane system including (a) a porous membrane formed from at least one first polymer; and (b) particles of at least one second polymer different from the first polymer, wherein the porous membrane (a) has the particles (b) immobilized, wherein the at least one second polymer includes units (I) which are formed by polymerizing N-vinylcaprolactam, and the weight ratio of the particles (b) is at most 15 wt%, based on the total weight of the porous membrane (a) and the particles (b).

According to the invention, a high fouling resistance can be achieved without including particles (b) at a high amount. Specifically, an amount of the particles (b) of 15 wt% or lower is sufficient for obtaining a high fouling resistance.

The membrane system obtained by the present invention includes a porous membrane (a) as well as particles (b) and can be used for filtration. Preferably, the membrane system consists of the porous membrane (a) and the particles (b).

The porous membrane (a) is formed from at least one first polymer, and preferably consists of the at least one first polymer. The first polymer is not particularly limited according to the present invention. Specifically, the first polymer can be any polymer material that is suitable for forming a polymer membrane (membrane forming polymer). Such polymer materials include but are not limited to polyvinylidene fluoride (PVDF), polyacrylonitrile (PAN), polypropylene (PP), polyethylene (PE), polysulfone (PSU), polyethersulfone (PES/PESU), polyarylester sulfone (PAES), polyamide (PA), and polyphenyleneoxide (PPO). The above-listed polymer materials can be used alone or in combination. Preferably, the at least one first polymer is only one polymer. Preferably, the first polymer is selected from PES, PSU or PVDF.

The particles (b) are formed from at least one second polymer that is different from the first polymer. Different kinds of particles (b) may be included. For instance, one type of particles (b) may be formed from one type of second polymer and another type of particles (b) may be formed from another type of second polymer. The particles (b) may include or preferably consist of polymer blends. Preferably, the particles (b) are of the same type. Moreover, it is preferred that the particles (b) consist of only one second polymer.

According to the present invention, the at least one second polymer may be crosslinked or not crosslinked.

The at least one second polymer includes units (I) which are formed by polymerizing N-vinylcaprolactam, i.e., having a side group that includes an amide moiety. A "side group" of a polymer is a group that is bound to the polymer backbone as a part of a repeating unit of the polymer. Herein, a "repeating unit" of a polymer is also referred to as "unit" or "polymer unit".

The molar fraction of the units (I) with respect to the entire amount of the repeating units of the at least one second polymer is not particularly limited. Preferably, the molar fraction of the units (I) is at least 50 mol-%, more preferably at least 75 mol-%. The molar fraction of the units (I) can be up to 100 mol%, i.e. the at least one second copolymer may consist of the units (I). The molar fraction of the units (I) (and of the units (II)) can be determined by ¹H-NMR spectroscopy, Raman spectroscopy or FTIR spectroscopy.

According to the present invention, the weight ratio of the particles (b) is at most 15 wt%, preferably at most 12.5 wt%, more preferably at most 10 wt%, particularly preferably at most 7.5 wt%, most preferably at most 5 wt%, based on the total weight of the porous membrane (a) and the particles (b). As the production of the particles (b) requires extensive efforts and costs, a corresponding weight ratio of the particles (b) makes the manufacturing of the membrane system more economical. Concurrently, in accordance with the present invention, the particles can also be produced *in situ* as will be explained later herein below. A high weight ratio of the particles (b) is not necessary in order to obtain a sufficient fouling resistance. Nevertheless, the weight ratio of the particles (b) may be at least 0.01 wt%, preferably at least 0.1 wt%, more preferably at least 0.5 wt%, particularly preferably at least 1.0 wt%, most preferably at least 2.5 wt%.

As mentioned, the weight ratio of the particles (b) refers to the solid weight of the particles (b) without any liquid that may be absorbed by the at least one second polymer as described below. The weight ratio of the particles (b) can be determined by thermogravimetric analysis.

According to the present invention, the porous membrane (a) has the particles (b) immobilized. That is, the particles (b) are entrapped by the membrane (a). Therefore, the particles (b) cannot be easily removed (e.g. washed out) from the membrane system so that the excellent fouling resistance of the membrane system obtained by the present invention is maintained even when the membrane system is used for filtration for a prolonged time period.

According to a preferred embodiment of the present invention, the particles (b) have a hydrodynamic diameter of 20 nm to 2000 nm, preferably 40 nm to 1800 nm, particularly preferably 100 to 1500 nm, most preferably 400 to 1200 nm. Particles (b) having such a size can be easily synthesized by conventional polymerization techniques (for example precipitation polymerization) and stably immobilized in the membrane (a).

The hydrodynamic diameter of the particles can be measured at room temperature in an aqueous environment using dynamic light scattering (DLS). A DLS measurement can be performed using a "Zetasizer Ultra" device from the company Malvern Panalytical. For instance, the measurements can be carried out at a fixed scattering angle θ = 90° and can be repeated for three or more times.

According to a preferred embodiment of the present invention, the particles (b) are gel particles, i.e. particles of gel. In that case, since the particles (b) are particles of at least one second polymer, the membrane system obtained by the present invention includes polymeric gel particles, preferably polymeric microgel particles.

A "polymeric gel" is a polymer network that is expanded throughout its whole volume by a fluid. According to the present invention, the polymer network of the polymeric gel particles may be crosslinked or not crosslinked.

A "polymeric microgel" is a particle of polymeric gel (polymeric gel particle), the particle having a hydrodynamic diameter of 20 nm to 2000 nm. According to the present invention, it is preferred that the polymeric microgel particles have a hydrodynamic diameter of 40 nm to 1800 nm, more preferably 100 nm to 1500 µm, even more preferably 400 nm to 1200 nm.

The fluid expanding the polymeric gel particles (b) is not particularly limited and is preferably a liquid. The liquid can be an organic solvent or a mixture of organic solvents and may further include water. The nature and composition of the liquid depends on the gel particle's environment. Preferably, the fluid contained in the polymeric (micro)gel particles (b) is mainly or completely constituted by water or represents an aqueous solution.

The content of the fluid or liquid contained in the polymeric gel particles (b) is not particularly limited. An upper limit of the content of the fluid is imposed by the swelling capacity or swelling degree of the particles (b), which depends on the material constituting the polymeric gel particles (b). Preferably, the content of the fluid, based on the total weight of the fluid and the at least one second polymer, is 1 to 60 wt%, preferably 5 to 40 wt%.

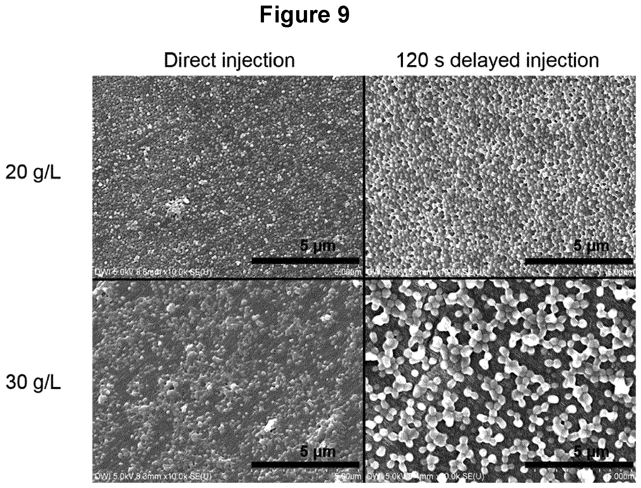

According to a preferred embodiment of the present invention, at least a part of the particles (b) are present on at least one surface of the porous membrane (a). Preferably, at least a part of the particles (b) present on the surface are both present on the surface as well as immobilized by the porous membrane (a). These particles (b) are embedded in the porous membrane (a) so that a highly stable connection with the porous membrane (a) is established and such that a portion of each of the particles (b) is exposed to the environment of the membrane system. Particles (b) that are present within the membrane (a) as well as particles that are present on the surface of the membrane (a) can be made visible by means of field emission scanning electron microscopy (FESEM; see Figure 9). Moreover, based on FESEM, it is also possible to determine the ratio of the surface area that is covered by the particles (b) in an unswollen state. According to the present invention, this ratio is not particularly limited. Preferably, the ratio of the surface area that is covered by the particles (b), based on the entire surface area of the surface under consideration, is 1 % to 99%, more preferably 10% to 90%, particularly preferably 25% to 75%, most preferably 40% to 60%.

When the membrane system obtained by the present invention is used for removing impurities from a feed solution by means of filtration, impurities accumulate at the upstream surface of the membrane. When the particles (b) are present on at least one surface, e.g. said upstream surface, an excellent fouling resistance can be obtained despite a rather low overall weight ratio of the particles (b). Preferably, the particles (b) are present on only one surface of the porous membrane (a). Thereby, the amount of particles (b) can be minimized.

By providing the particles in the coagulation bath and/or the bore solution, if provided, at least at the time of step (v) as already described herein above, the particles are present on and in the proximity of the membrane surface. This is particularly advantageous, if the components desired to be retained by the membrane have fouling properties (e.g. protein purification).

According to a preferred embodiment of the present invention, the at least one second polymer may include, in addition to the units (I), units (II) that are different from the units (I). The sum of the molar fraction of units (I) and (II) with respect to the entire amount of repeating units of the at least one second polymer is not particularly limited. Preferably, above sum is at least 50 mol-%, more preferably at least 75 mol-%, particularly preferably at least 90 mol-%. Most preferably, the at least one polymer consists of said units (I) and (II).

The units (II) may have a functional group. By appropriately selecting the unit (II) and the optional functional group thereof, specific properties may be imparted to the membrane system according to the present invention. For instance, the unit (II) may impart a switchable property to the particles (b). In that case, the properties of the particles (b), and thus the properties of the membrane system can be changed ("switched") by changing an external parameter, such as the temperature, the pH and/or the salt concentration of the medium surrounding the particles (b). As a specific example for switchability, a change of the salt concentration may lead to a swelling or contraction of the particles (b). When the particles swell, the porosity of the membrane system decreases, when the particles contract, the porosity of the membrane system increases.

The membrane system may include different types of particles (b), each type having a different unit (II). Moreover, the particles (b) may include different units (II) within one and the same particle (b).

In particular, the units (II) may include or be units (Ila) having a zwitterionic moiety. Zwitterionic moieties are neutral moieties having formal unit electrical charges of opposite sign. Zwitterionic moieties are highly hydrophilic. The units (Ila) further increase the fouling resistance of the membrane system. Moreover, units (Ila) can render the volume of the particles (b) responsive to a change of the salt concentration of the surrounding medium. In particular, an increase of the salt concentration may result in a contraction, a decrease of the salt concentration in a swelling of the particles (b) including the units (Ila).

Moreover, the units (II) may include or be units (Ilb) having an epoxy group, preferably a glycidyl group. Glycidyl groups react with electrophilic and nucleophilic reagents under ring opening conditions. Glycidyl groups undergo an addition reaction with primary and secondary amines, thiols, carboxyls and hydroxyls without formation of by-products. These functional groups can be used for interparticle cross-linking or covalent attachment to a component present in the membrane structure.

Furthermore, the units (II) may include or be units (IIc) having a hydroxy group. Hydroxy groups are less reactive than glycidyl groups but can be converted to more reactive functionalities like amine, carboxyl or vinyl by standard chemical transformations. Hydroxy groups can be crosslinked by divinylsulfones or multifunctional isocyanates inducing inter-particle crosslinks or grafting of particles to the membrane polymer.

The units (II) may include or be units (lid) having an amino group. An amino group can directly be reacted by a Michael addition reaction with acrylates, epoxides or active esters. These reactions can be used for crosslinking or grafting processes.

The units (II) may include or be units (IIe) having an imide group, preferably a succinimide group and/or a maleimide group, which can react with amine or thiol groups.

Alternatively, the units (II) may include or be units (Ilf) having a carboxyl group. Active ester groups can be obtained from the units (Ilf) (e.g. by using 1-Hydroxybenzotriazol (HOBt)) and can usually react with amines and thiols under ambient conditions (room temperature, aqueous solution) and can be used for the crosslinking, grafting and covalent attachment of proteins.

According to a preferred embodiment of the present invention, the units (Ila), (lib), (lie), (IId), (IIe) and (Ilf) are formed by polymerizing a monomer including a (meth)acrylic acid moiety and the zwitterionic moiety, the epoxy group, the hydroxy group, the amino group, the imide group and the carboxyl group, respectively.

For instance, the unit (IIb) may be formed by polymerizing glycidyl (meth)acrylate, preferably glycidyl acrylate as the above monomer. More specifically, the second polymer may be a copolymer including the units (I) and the glycidyl (meth)acrylate units (IIb), as described in Langmuir 2007, 23, 10793-10800.

According to a particularly preferred embodiment of the present invention, the second polymer includes units (Ila) having a zwitterionic moiety and the zwitterionic moiety is a betaine moiety, preferably a sulfobetaine moiety.

A betaine moiety is a neutral moiety with a positively charged cationic functional group that bears no hydrogen atom and with a negatively charged functional group that may not be directly adjacent to the cationic site. Conventionally, a betaine cannot be represented by means of a chemical formula without formal charges. According to the present invention, the positively charged cationic functional group of the betaine moiety is preferably an onium ion such as a quaternary ammonium cation or a phosphonium cation. The negatively charged functional group may be selected from the group consisting of carboxylate and sulfonate.

Preferably, the zwitterionic moiety/betaine moiety of the units (IIa) is represented by the following chemical formula.

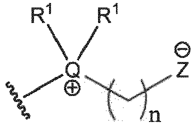

In the above chemical formula, each R¹ independently represents a hydrogen atom and an alkyl group having 1 to 6 carbon atoms. Preferably, each R¹ independently represents an alkyl group having 1 to 6 carbon atoms, more preferably an alkyl group having 1 to 4 carbon atoms, particularly preferably methyl or ethyl, most preferably methyl; Q represents P or N, Z represents SOs (sulfonyl) or CO₂ (carboxyl), and n is an integer of from 1 to 10, preferably 1 to 6, more preferably 2 to 4.

A second polymer including such units (IIa) can be obtained by polymerizing a monomer represented by the following chemical formula.

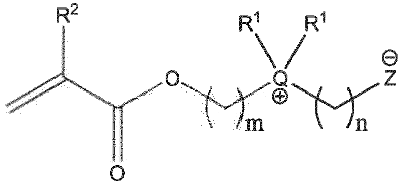

In the above chemical formula, R² is a hydrogen atom or a methyl group, m is an integer of 1 to 10, preferably 1 to 6, more preferably 2 to 4, and Q, Z, R¹ as well as n have the same meanings as defined above.

Preferably, the zwitterionic moiety/sulfobetaine moiety of the units (IIa) is represented by the following chemical formula.

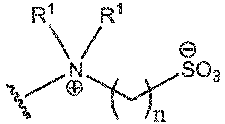

In the above chemical formula, R¹ as well as n have the same meanings as explained above.

According to the present invention, the particles (b) can be formed by polymerizing a mixture including a monomer for forming the units (I) (such as an N-vinyllactam (Ia) or an N-alkyl (meth)acrylamide (Ib)), optionally a monomer for forming the units (II), optionally an initiator, and optionally a cross-linking agent. A preferred initiator is 2,2'-azobis(2-methylpropionamidine)dihydrochloride (AMPA). A preferred cross-linking agent is N,N'-methylenebis(acrylamide) (BIS).

According to the present invention, the porous membrane (a) obtained by the present invention has the form of a flat sheet or a tube, wherein a tubular form is particularly preferred.

The size of the membrane system / the porous membrane (a) is not particularly limited. For instance, when the porous membrane (a) has the form of a tube, it may have an inner diameter of 80 µm to less than 500 µm (hollow fiber membrane), 500 µm to less than 5 mm (capillary membrane), or 5 mm to 25 mm (tubular membrane).

Tubular membranes are usually not self-supporting membranes. Conventionally, they are located on the inside of a tube, made of a special kind of material. This material is the supporting layer for the membrane. Because the location of tubular membranes is normally inside a tube, the flow in a tubular membrane is usually inside out. The main cause for this is that the attachment of the membrane to the supporting layer is usually very weak. Because of the size of the membrane surface, plugging of tubular membranes is not likely to occur. A drawback of tubular membranes is that the packing density may be low, which results in high prices per module.

A capillary membrane usually has a mechanical stability which is sufficiently strong to resist filtration pressures. Because of this, the flow through capillary membranes can be both inside out and outside in. The diameter of capillary membranes is smaller than that of tubular membranes. Because of the smaller diameter the chances of plugging are much higher with a capillary membrane. A benefit is that the packing density can be much greater.

Conventionally, hollow fiber membranes are membranes with a low diameter. Consequentially, the chances of plugging of a hollow fiber membrane are rather high. The membranes are normally used for the treatment of water with a low suspended solids content. The packing density of a hollow fiber membrane can be very high.

According to the present invention, the membrane system includes the particles (b). One possibility for manufacturing the membrane system of the present invention is that the particles (b) are present or formed at the time of precipitating the porous membrane (a). Another possibility for manufacturing the membrane system of the present invention is that the porous membrane (a) is already present at the time the particles (b) are formed.

According to one embodiment of the present invention, the method is for forming a membrane system wherein the porous membrane (a) has the form of a flat sheet. In this case, no bore solution is provided, in step (iv), the polymer solution is shaped into the form of a flat sheet, and the particles (b) are contained in the coagulation bath at least at the time of step (v). Optionally, particles (b) can additionally be contained in the polymer solution.

According to another embodiment of the present invention, the method is for forming a membrane system wherein the porous membrane (a) has the form of a tube. In this case, a bore solution is provided, in step (iv) the polymer solution and the bore solution are shaped into the form of a tube which is filled with the bore solution, and the particles (b) are contained in the coagulation bath and/or the bore solution at least at the time of step (v). Optionally, again, particles (b) can additionally be contained in the polymer solution.

In step (i), a polymer solution containing the at least one first polymer is provided. The polymer solution is of the same type as a conventional polymer solution for forming a flat sheet membrane or a membrane having a tubular shape e.g. by temperature induced phase separation (TIPS) and/or non-solvent induced phase separation (NIPS). Hence, a person skilled in the art is able to appropriately adjust the composition of the polymer solution based on his background knowledge.

The polymer solution is a membrane-forming polymer solution. A membrane-forming polymer solution contains at least one membrane-forming polymer and at least one solvent.

Suitable polymers to be included in the polymer solution include, but are not limited to, PVDF, PAN, PP, PE, PSU, PES/PESU, PAES, as already described above. Typical membrane forming polymers for TIPS include but are not limited to PVDF, PAN, PTFE, PP and PE, wherein PVDF and PAN are also suited for a combination of TIPS and NIPS. Typical membrane forming polymers for NIPS (or a combination of NIPS and TIPS) include but are not limited to PSU, PES/PESU, PAES, PVDF and PAN.

Each of the polymer solution provided in step (i) and the bore solution optionally provided in step (iii) includes at least one solvent. For the polymer solution, the at least one solvent is selected such that a solution can be formed of the at least one first polymer. The at least one solvent preferably includes an organic solvent such as N-methyl-2-pyrrolidone (NMP), dimethylformamide (DMF), dimethylacetamide (DMAc), dimethylsulfoxide (DMSO), tetrahydrofuran (THF), wherein NMP and DMSO are preferred. In addition to the one or more organic solvents, water may be contained as a non-solvent in the polymer solution. Preferably, the water is deionized water. According to the present invention, the weight ratio of water to organic solvent in the solution provided in step (i) is preferably 0 to 20%, more preferably 1 to 20%, even more preferably 1 to 15%, particularly preferably 3 to 12%.

In addition to the membrane forming polymer and the solvent, the solution provided in step (i) may contain a pore-forming additive. Suitable pore-forming additives are known to the skilled person. For instance, the pore-forming additive may be a polymer that does not form a membrane (non-membrane-forming polymer) such as polyvinylpyrrolidone (PVP), polyethyleneglycol (PEG), polyoxazoline, polypropylene glycol, polyglycolmonoester, a copolymer of polyethyleneglycol with polypropylene glycol, a water-soluble cellulose derivative, polysorbate, polyethylene-polypropylene oxide copolymer, polyethyleneimine, and combinations thereof. Further pore-forming additives that can be used in the solution provided in step (i) are glycerol and lithium chloride. Preferred pore-forming additives are PVP K30 and PVP K90. Here, "K30" and "K90" indicates that the PVP has a K-value of 30 and 90, respectively. The K-value is commonly used for characterizing polymers and directly relates to the average molecular mass of the polymer. The K-value can be taken as an indicator for the degree of polymerization and the polymer chain length.

Furthermore, functional additives may be present in the polymer solution. Polyethylene imine for example may function as an anchor for covalent binding of the particles to the membrane surface.

The bore solution optionally provided in step (iii) of the method according to the present invention is not particularly limited as long as it induces coagulation/precipitation of the membrane-forming polymer solution. Accordingly, the bore solution contains a non-solvent for the membrane forming polymer, for instance water. Preferably, the bore solution further contains the same constituents as the polymer solution of step (i), except for the at least one first polymer. However, the bore solution may also contain constituents different from the ones of the polymer solution of step (i).

According to a preferred embodiment of the present invention, the bore solution contains an organic solvent such as NMP and deionized water. Preferably, the weight ratio of water to organic solvent in the bore solution is 20 to 100%, more preferably 40 to 60%. Similar to the polymer solution provided in step (i), the bore solution may contain a non-membrane-forming polymer such as polyvinylpyrrolidone (PVP), polyethyleneglycol (PEG), glycerol, polyoxazoline, polypropylene glycol, polyglycolmonoester, a copolymer of polyethyleneglycol with polypropylene glycol, a water-soluble cellulose derivative, polysorbate, polyethylene-polypropylene oxide copolymer, polyethyleneimine, and combinations thereof. The non-membrane-forming polymer can be added in order to adjust the viscosity of the bore solution and/or for controlling the speed of coagulation. (In the solution provided in step (i), PVP (e.g. PVP K30 or PVP K90) may exert a pore forming effect during membrane formation and suppresses the formation of macro-voids in membranes.)

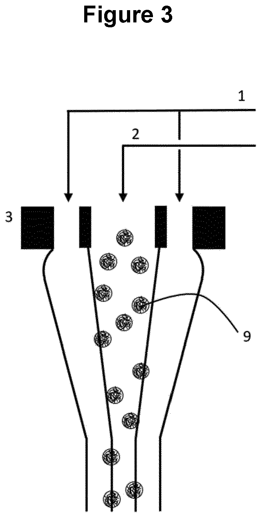

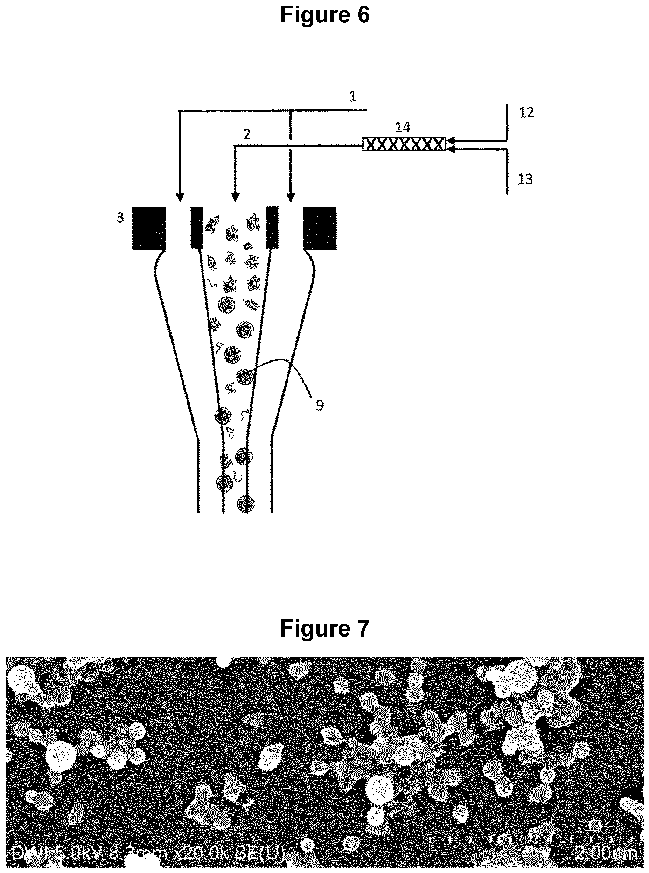

In step (iv) of the method according to the present invention, the polymer solution is shaped into a predetermined form. According to one embodiment of the present invention, the polymer solution is shaped into the form of a flat sheet in step (iv). This can be accomplished for instance by (iv') casting the polymer solution onto a flat substrate, as in the manufacture of conventional flat sheet membranes. Optionally, step (iv') may be performed by means of a casting knife. In another embodiment of the present invention, the polymer solution is shaped into the form of a tube. This can be accomplished for instance by (iv") extruding a jet of the polymer solution and the bore solution by employing a spinneret for forming a membrane having a tubular shape. Spinnerets of this kind and methods for forming membrane systems of tubular geometry are generally known to the skilled person (see e.g. Figures 3 and 6).

According to a preferred embodiment of the present invention, the flow rate of the bore solution in step (iv") is 1 to 250 ml/min, preferably 2 to 150 ml/min, more preferably 5 to 50 ml/min, for example 7 ml/min. Moreover, the flow rate (extrusion rate) of the polymer solution in step (iv") is preferably 0.5 to 150 g/min, more preferably 1 to 50 g/min, particularly preferably 3 to 7 g/min, for example 5.5 g/min.

In step (v) of the method for forming a membrane system according to the present invention, the polymer solution having the predetermined form (flat sheet or tube) is immersed into a coagulation bath to coagulate the porous membrane (a) having the immobilized particles (b). By the immersing step (v), the polymer solution having the predetermined form is exposed to conditions which result in the coagulation of the hollow fiber membrane or the flat sheet membrane.

According to a preferred embodiment of the present invention, the coagulation of step (v) is carried out by temperature induced phase separation (TIPS), by non-solvent induced phase separation (NIPS) or by a combination of TIPS and NIPS. When the coagulation of step (v) involves TIPS, the coagulation bath has a temperature that is different from the temperature of the polymer solution. Due to the temperature difference, the at least one first polymer is coagulated (precipitated). When step (v) involves NIPS, the coagulation bath has a composition that results in coagulation of the porous membrane (a). In particular, the coagulation bath may include a solvent composition that represents a non-solvent for the at least one first polymer.

In case the method according to the present invention includes step (iv"), the jet of the polymer solution may be directly immersed into the coagulation bath, i.e. without any gap between the spinneret and the coagulation bath. However, it is preferred in view of processability that there is a gap between the spinneret and the surface of the coagulation bath. Although the gap may be absent (i.e. the gap may have a width of 0 cm), the gap preferably has a width of more than 0 cm, more preferably at least 5 cm, particularly preferably at least 15 cm. The gap width is preferably not longer than 150 cm, more preferably not longer than 50 cm.

According to a preferred embodiment, the method for forming a membrane system according to the present invention further includes a step of (vi) separating (removing) the membrane system, including the coagulated porous membrane (a), from the coagulation bath. Subsequent to said step (vi), a step of (vii) immersing the membrane system into a rinsing bath may be carried out. By virtue of said step (vii), the membrane system is rinsed (washed) so that components of the polymer solution and the optional bore solution which are undesired in the membrane system can be removed. A complete solvent exchange, i.e. a complete removal of the polymer and bore solutions, is desired.

Furthermore, subsequent to step (vi) and/or step (vii), a step of (viii') immersing the membrane system into a collection bath can be carried out. The membrane system can, as an alternative to step (viii'), be (viii") collected on a collection drum.

The respective composition of the coagulation bath, the rinsing bath and the collection bath is not particularly limited and may include a solvent or solvent composition. As the solvent or solvent composition, an organic solvent and/or water may be used. As mentioned above, the coagulation bath has a composition and/or temperature that results in precipitation/coagulation of the membrane system. Preferably, apart from the particles (b), if applicable, the coagulation bath consists of deionized water. The same applies to the rinsing bath and the collection bath.

According to a preferred embodiment of the present invention, the porous membrane (a) has a tubular shape and step (v) and the optional steps (vi) to (viii') are carried out by dragging the coagulated porous membrane (a) having a tubular shape by means of a pulling wheel. Preferably, the pulling wheel pulls the membrane system at a speed of 0.1 to 40 m/min, more preferably 0.5 to 20 m/min, particularly preferably 0.7 to 7 m/min, for example 1.5 m/min.

According to the present invention, the coagulation bath and/or the bore solution, if provided, contains the particles (b) at least at the time of step (v). In case the particles (b) are contained in the coagulation bath and/or the bore solution, if provided, at the time of step (v), the particles (b) will be present on at least one surface of the porous membrane (a). It is particularly preferred that the particles (b) are contained in the bore solution at the time of step (v). Thereby, the particles (b) will be present on the inner surface of the membrane system having a tubular shape.

According to another preferred embodiment of the present invention, the bore solution and/or coagulation bath contain(s) a precursor of the particles (b). Such precursor is reacted to the particles (b) after the bore solution has been provided in step (iii), or after immersion into the coagulation bath took place in step (iv), so that the particles (b) are contained in the bore solution or coagulation bath at the time of step (v). Additionally, the polymer solution may contain the particles or a precursor of the particles.

Such precursor concept can also be adopted for the production of flat sheet membranes by providing such precursor of the particles (b) in the coagulation bath.

Preferably, the precursor is a mixture including a monomer for forming the units (I) , optionally a monomer for forming the units (II), optionally an initiator, and optionally a cross-linking agent (crosslinker). A preferred initiator is 2,2'-azobis(2-methylpropionamidine)dihydrochloride (AMPA). A preferred cross-linking agent is N,N'-methylenebis(acrylamide) (BIS).

According to the invention, the particles (b) can be formed by polymerizing the precursor in the bore solution and/or coagulation bath. Instead of dispersing fully synthesized particles (b) in the bore solution and/or coagulation bath, this embodiment combines the synthesis of particles (b) with the membrane formation. That is, the synthesis of the particles (b) and the production of the membrane occur essentially at the same time, as e.g. shown in Figure 6. In the preferred embodiment shown in Figure 6, the bore tubing (tubing for the bore solution fluidically connected to the bore channel of a spinneret for forming a jet of the bore solution and the polymer solution), the bore channel of the spinneret and the lumen channel of the hollow fiber (the inner part of the hollow fiber of the polymer solution to become the hollow fiber membrane) function as a flow reactor for the synthesis of the particles (b). Preferably, a monomer for forming units (I) (and optionally a monomer for forming units (II)) and a crosslinker are dissolved in a mixture of solvent and non-solvent, and pumped into the spinneret through the bore channel. The initiator may be separately dosed into the bore channel, and may be activated by increase of temperature. At the point of initiator dosing, the synthesis of the particles (b) starts. A larger distance from the point of the initiator dosing to the spinneret means that the particles (b) enter the spinneret already synthesized. A smaller distance to the spinneret means that the synthesis of the particles (b) starts in the spinneret. By changing this distance, the appearance of the surface coating can be varied from more spherical microgel coatings to more smooth coatings.

According to this embodiment, a membrane system having a tubular form, wherein the particles (b) are present on the inner surface (lumen surface) of the hollow fiber, can be provided. Since the particles (b) are produced substantially simultaneously with the porous membrane (a), a very stable connection between the porous membrane (a) and the particles (b) can be obtained.

The surface coverage of the polymer particles (b) (i.e. the area ratio of the lumen surface of the membrane system that is covered by the particles (b)) can be varied by changing the spinning parameters and compositions of bore solution and polymer solution. That is, the degree of modification with the particles (b) on the membrane surface is easily scalable.

As mentioned above, another possibility for manufacturing the membrane system of the present invention is that the porous membrane (a) is present at the time the partides (b) are formed. That is, the membrane system can be formed by a post-modification of a porous membrane (a) that has been provided previously.

Thus, in a further aspect, the present disclosure relates to a method for forming a membrane system, comprising the steps (α) providing a porous membrane (a); (β) providing a solution containing a precursor of the particles (b); (γ) reacting the precursor contained in the solution to the particles (b); and (δ) contacting the solution with the porous membrane (a), wherein steps (γ) and (δ) are performed at least in part at the same time.

By virtue of this method, it is possible to obtain such membrane system as described above based on a porous membrane (a) that has already been produced. Thus, the membrane (a) can be tailored independently from the modification with the polymer particles (b). Moreover, since steps (γ) and (δ) are performed at least in part at the same time, a stable connection between the particles (b) and the porous membrane (a) can be obtained.

The porous membrane (a) provided in step (α) is not particularly limited. In principle, any porous membrane (a) can be provided. In this context, the same as already outlined above with respect to the porous membrane (a) applies to the porous membrane (a) provided in step (α). According to a preferred embodiment, the membrane (a) provided in step (α) is integrated in a membrane module.

Regarding the precursor of the particles (b), the same as outlined above applies. The solution provided in step (β) contains a precursor of the particles (b) and the precursor is reacted to the particles (b) in step (γ). Preferably, the precursor is a mixture including a monomer for forming the units (I), optionally a monomer for forming the units (II), optionally an initiator, and optionally a cross-linking agent. A preferred initiator is 2,2'-azobis(2-methylpropionamidine)dihydrochloride (AMPA). A preferred cross-linking agent is N,N'-methylenebis(acrylamide) (BIS).

In step (γ), the precursor contained in the solution is reacted to the particles (b). The reaction may be initiated for instance by heating the solution provided in step (β) and/or by introducing an initiator into the solution.

In step (δ), the solution is contacted with the porous membrane. Step (δ) is not particularly limited. For instance, step (δ) can be carried out by immersing the porous membrane (a) provided in step (α) into the solution provided in step (β), before or during step (γ). Preferably, step (δ) is carried out by filling a module containing the porous membrane (a) provided in step (α) with the solution provided in step (β). The module is then immersed into a water bath to provide the temperature needed for the synthesis of the particles (b). The immersion time preferably is 5 seconds to 24 hours, more preferably 30 seconds to 12 hours, particularly preferably 1 minute to 1 hour, most preferably 3 minutes to 30 minutes. In this context, as already mentioned above, it is preferred that the porous membrane provided in step (α) is integrated into a membrane module.
Figure 1 schematically shows a method for manufacturing a polymer membrane or a membrane system having a tubular geometry.

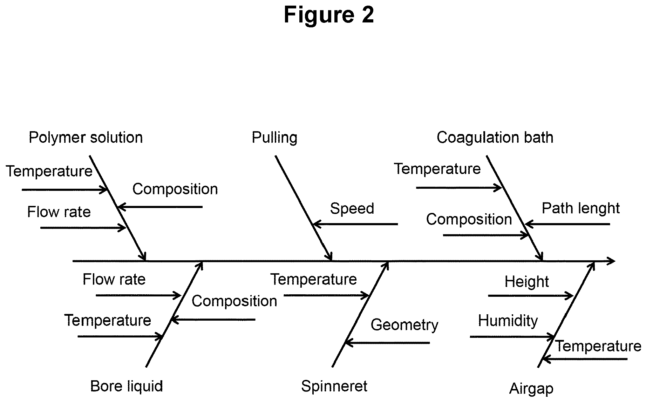

Figure 2 schematically illustrates the influences of various process parameters on the outcome of a method for producing a hollow fiber membrane by extrusion through a spinneret.
Figure 3 schematically shows the method of manufacture employed in Example 1.
Figure 4 shows the inner surface of the hollow fiber membrane produced in Example 1 (images obtained by FESEM). As can be seen, microgel particles (b) are present on the inner surface of the hollow fiber membrane.
Figure 5 shows the permeances (in liter per m² h and bar (LMH/bar)) of a reference membrane without microgels (left) and a microgel functionalized membrane (right) as obtained in Example 1. Filtration fluxes are varied, and backwashing is conducted in between of the filtration steps. Water and 0.5 g/L BSA in PBS buffer function as feed solutions.
Figure 6 schematically shows a preferred embodiment of the present invention according to which the particles (b) are produced substantially simultaneously with the porous membrane (a) (cf. Example 2).
Figure 7 shows the inner surface of the hollow fiber membrane produced in Example 2 (image obtained by FESEM). As can be seen, particles (b) are present on the inner surface of the hollow fiber membrane. A typical PES membrane surface structure is visible beneath the particles (b).
Figure 8 schematically shows the method underlying Example 3.
Figure 9 shows particles (b) (present as microgel particles) covering membrane surfaces after post-modification of membranes in filtration modules (cf. Example 3). Delayed injections result in a coating with substantially spherical microgel particles.

Higher VCL concentration creates larger diameters of the particles (b). Direct injection effects a surface fully covered with microgel material.

### Reference sign list

- 1: Polymer solution
- 2: Bore fluid/solution
- 3: Spinneret
- 4: Gear pump for polymer solution
- 5: Pump for bore solution
- 6: Coagulation bath
- 7: Washing bath
- 8: Pulling wheel
- 9: Microgel
- 10: Glass sheet
- 11: Flatsheet membrane
- 12: Monomer solution
- 13: Initiator solution
- 14: Static mixer
- 15: Membrane module

The present invention is further illustrated based on the following Examples without being limited thereto.

### Example 1

A polymer solution consisting of 14 wt% PES, 2 wt% PVP K90 and 84 wt% NMP was prepared. In addition, a bore solution containing the polymer particles (b) was prepared. The bore solution consisted of 0.708 wt% PVCL microgel particles (which were formed previously by polymerizing a mixture including the monomer N-vinylcaprolactam (VCL) (14.8 g/L), the crosslinker *N,N*'-methylenebis(acrylamide) (BIS) (0.408 g/L) and the initiator 2,2'-azobis(2-methylpropionamidine)dihydrochloride (AMPA) (0.336 g/L), 49.646 wt% NMP and 49.646 wt% water.

A hollow fiber membrane was prepared by extruding the bore solution and the polymer solution through a spinneret for forming a hollow fiber membrane (see Figure 3) with the following spinning parameters (air gap, fluid flow rates, temperatures, pulling wheel speed; see the following Table 1).

The resulting hollow fiber membrane contained said PVCL microgel particles in a content of at most 15 wt%. Upon contact with a solvent, these particles form a solvent swollen microgel.

**Table 1: Spinning parameters**

| Polymer flow rate | Bore flow rate | Pulling speed | Air gap | Temperature polymer solution | Temperature bore fluid | Temperature coagulation bath |
|---|---|---|---|---|---|---|
| [mL/min] | [mL/min] | [cm/s] | [cm] | [°C] | [°C] | [°C] |
| 3 | 1.5 | 10 | 4.5 | 60 | 60 | 60 |

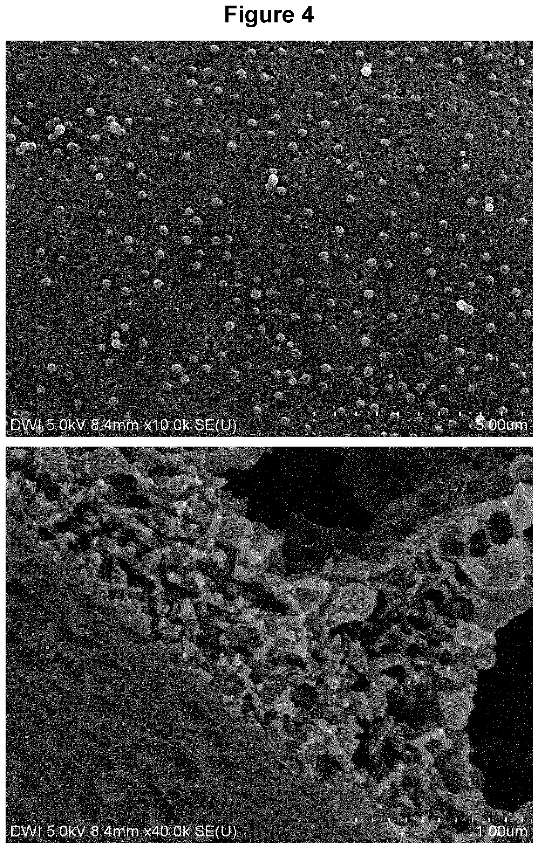

The inner surface of hollow fiber membrane was examined by FESEM after critical point drying. The result is shown in Figure 4.

A reference membrane was formed using the same polymer solution and spinning parameters but with a bore solution containing 50 wt.% water and 50 wt.% NMP.

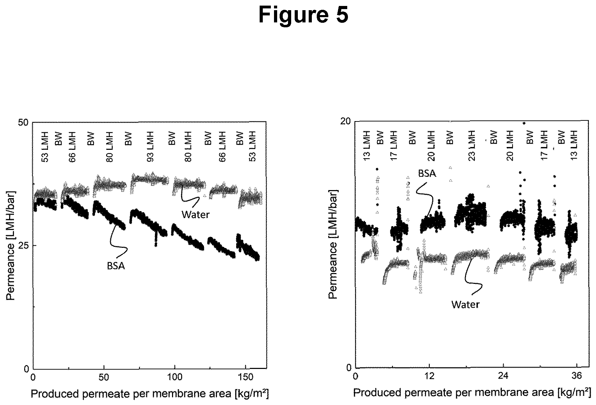

Filtration experiments using water and 0.5 g/L BSA in phosphate buffered saline (PBS buffer) as feed solutions conducted at different fluxes with backwashing (BW) steps in between show the fouling behavior. The reference membrane without microgels looses permeance during the filtration with BSA (Figure 5, left). The permeance of the membrane containing the microgel functionalization retains its permeance during the BSA filtration (Figure 5, right).

### Example 2

A polymer solution consisting of 16 wt% PES, 4 wt% PVP K30, 4 wt% PVP K90 and 76 wt% NMP was prepared. In addition, a monomer solution and an initiator solution containing precursors of the polymer particles (b) were prepared. In particular, the monomer solution consisted of 24 g/L VCL and 0.66 g/L BIS. The initiator solution consisted of 2.7 g/L AMPA. The two solutions were passed through a static mixer and were transported with corresponding flow rates to achieve 20 g/L VCL concentration. Mixing took place continuously and the resulting solution was used as the bore solution in the continuous spinning process. Specifically, a hollow fiber membrane was prepared as shown in Figure 6, i.e. by extruding the bore solution and the polymer solution through a spinneret for forming a hollow fiber membrane in a coagulation bath at 70°C, wherein the polymer particles (b) were formed during the extrusion process. The inner surface of the hollow fiber membrane was examined by FESEM. The result is shown in Figure 7.

### Example 3

A module having a length of 25 cm and comprising three porous PES membranes was provided (α). Further, solutions, each containing a precursor of the particles (b), were provided (β). In particular, VCL was used as monomer for forming the units (I). Two different VCL concentrations were used (20 g/L and 30 g/L). The 20 g/L VCL solution additionally contained 0.55 g/L BIS and 0.45 g/L AMPA. The 30 g/L VCL solution additionally contained VCL, 0.8 g/L BIS and 0.7 g/L AMPA.

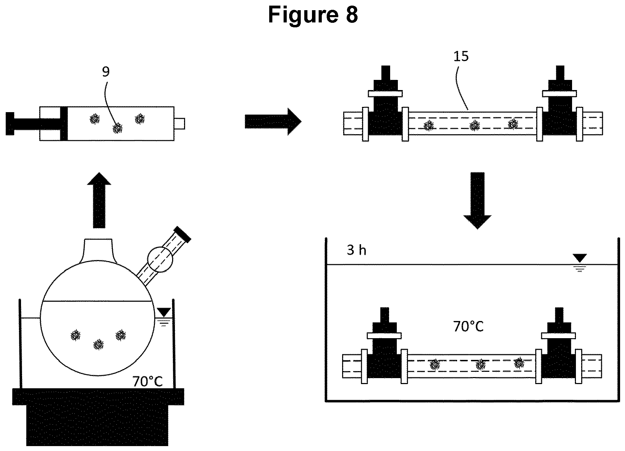

Each of the above solutions was prepared in a flask. The polymerization was initiated by heating the respective solution to 70°C ((y); see Figure 8). Either directly or after 120 s, the heated solutions were transferred into the lumen of the hollow fibers within the above-mentioned membrane modules. The modules were then kept at 70°C by immersion into a heated water bath. The results, i.e. FESEM images of the inner surfaces of the obtained membrane systems, are shown in Figure 9.

### Industrial Applicability

The membrane system obtained by the method according to the present invention has a high fouling resistance and is particularly suited for filtering fluids, preferably liquids, such as blood, beverages, such as milk, dairy (e.g. whey), wine and beer, and wastewater (industrial or municipal). It is also highly beneficial for separation processes in which a valuable retained component exhibits the tendency to adsorb on hydrophobic membrane materials, e.g. for the filtration of proteins and anti-bodies (or hydrophobic substances in general), and other biotechnological downstream processing applications.

## Claims

1. A method for forming a membrane system having the form of a flat sheet or a tube, including
(a) a porous membrane formed from at least one first polymer; and
(b) particles of at least one second polymer different from the first polymer,
wherein the porous membrane (a) has the particles (b) immobilized,
wherein the at least one second polymer includes units (I) which are formed by polymerizing N-vinylcaprolactam, and
the weight ratio of the particles (b) is at most 15 wt%, based on the total weight of the porous membrane (a) and the particles (b), the weight ratio of the particles (b) referring to the solid weight of the particles (b) and being determined by thermogravimetric analysis,
said method comprising the steps of
(i) providing a polymer solution containing the at least one first polymer;
(ii) providing a coagulation bath;
(iii) optionally providing a bore solution;
(iv) shaping the polymer solution into a predetermined form of a flat sheet or a tube; and
(v) immersing the polymer solution having the predetermined form into the coagulation bath;
to coagulate the porous membrane (a) having the immobilized particles (b);
wherein the coagulation bath and/or the bore solution, if provided, contains the particles (b) at least at the time of step (v).

2. The method according to claim 1,
wherein
a bore solution is provided,
in step (iv), the polymer solution and the bore solution are shaped into the form of a tube which is filled with the bore solution, and
the particles (b) are contained in the coagulation bath and/or the bore solution at least at the time of step (v).

3. The method according to claim 2,
wherein the bore solution and/or the coagulation bath contains a precursor of the particles (b) and the precursor is reacted to the particles (b) after the bore solution has been provided in step (iii), or after immersion into the coagulation bath took place in step (v) so that the particles (b) are contained in the bore solution and/or coagulation bath at the time of step (v).

4. The method according to claim 1, wherein no bore solution is provided, and in step (iv), the polymer solution is shaped into the form of a flat sheet, and the particles or precursors of the particles (b) are contained in the coagulation bath.

5. The method according to any one of claims 1 to 4,
wherein the particles (b) have a hydrodynamic diameter of 20 nm to 2000 nm as determined by dynamic light scattering.

6. The method according to any one of claims 1 to 5,
wherein the particles (b) are gel particles.

7. The method according to any one of claims 1 to 6,
wherein the particles (b) are present on at least one surface of the porous membrane (a).

8. The method according to any one of claims 1 to 7,
wherein the at least one second polymer further includes units (Ila) having a zwitterionic moiety, units (IIb) having an epoxy group, units (IIc) having a hydroxy group, units (Ild) having an amino group, units (IIe) having an imide group, and/or units (IIf) having a carboxyl group.

9. The method according to claim 8,
wherein
the units (IIa), (IIb), (IIe), (IId), (IIe) and (IIf) are formed by polymerizing a monomer including a (meth)acrylic acid moiety and the zwitterionic moiety, the epoxy group, the hydroxy group, the amino group, the imide group, and the carboxyl group, respectively.

10. The method according to any one of claims 8-9,
wherein the zwitterionic moiety is a betaine moiety, preferably a sulfobetaine moiety.

## Patentansprüche

1. Verfahren zum Bilden eines Membransystems, das die Form einer flachen Folie oder eines Rohrs aufweist, welches einschließt
(a) eine poröse Membran, die aus mindestens einem ersten Polymer gebildet ist; und
(b) Teilchen aus mindestens einem zweiten Polymer, das sich von dem ersten Polymer unterscheidet,
wobei die poröse Membran (a) die Teilchen (b) immobilisiert aufweist,
wobei das mindestens eine zweite Polymer Einheiten (I) einschließt, die durch Polymerisieren von N-Vinylcaprolactam gebildet werden, und
das Gewichtsverhältnis der Teilchen (b) höchstens 15 Gew.-% beträgt, bezogen auf das Gesamtgewicht der porösen Membran (a) und der Teilchen (b), wobei sich das Gewichtsverhältnis der Teilchen (b) auf das Feststoffgewicht der Teilchen (b) bezieht und durch thermogravimetrische Analyse bestimmt wird,
wobei das Verfahren die Schritte umfasst
(i) Bereitstellen einer Polymerlösung, die das mindestens eine erste Polymer enthält;
(ii) Bereitstellen eines Koagulationsbades;
(iii) optional Bereitstellen einer Bohrlösung;
(iv) Formen der Polymerlösung in eine vorbestimmte Form einer flachen Folie oder eines Rohrs; und
(v) Eintauchen der Polymerlösung mit der vorbestimmten Form in das Koagulationsbad;
um die poröse Membran (a) mit den immobilisierten Teilchen (b) zu koagulieren; wobei das Koagulationsbad und/oder die Bohrlösung, sofern vorhanden, die Teilchen (b) zumindest zum Zeitpunkt des Schrittes (v) enthält.

2. Verfahren nach Anspruch 1,
worin
eine Bohrlösung bereitgestellt wird,
in Schritt (iv) die Polymerlösung und die Bohrlösung zu einem Rohr geformt werden, das mit der Bohrlösung gefüllt wird, und
die Teichen (b) in dem Koagulationsbad und/oder der Bohrlösung zumindest zum Zeitpunkt von Schritt (v) enthalten sind.

3. Verfahren nach Anspruch 2,
wobei die Bohrlösung und/oder das Koagulationsbad einen Vorläufer der Teilchen (b) enthält und der Vorläufer mit den Teichen (b) umgesetzt wird, nachdem die Bohrlösung in Schritt (iii) bereitgestellt wurde, oder nach dem Eintauchen in das Koagulationsbad in Schritt (v) stattgefunden hat, so dass die Teilchen (b) zum Zeitpunkt von Schritt (v) in der Bohrlösung und/oder dem Koagulationsbad enthalten sind.

4. Verfahren nach Anspruch 1, wobei keine Bohrlösung bereitgestellt wird, und
in Schritt (iv) die Polymerlösung in die Form einer flachen Folie geformt wird, und die Teilchen oder Vorläufer der Teilchen (b) im Koagulationsbad enthalten sind.

5. Verfahren nach einem der Ansprüche 1 bis 4,
wobei die Teilchen (b) einen hydrodynamischen Durchmesser von 20 nm bis 2000 nm, bestimmt durch dynamische Lichtstreuung, aufweisen.

6. Verfahren nach einem der Ansprüche 1 bis 5,
wobei die Teilchen (b) Gelteilchen sind.

7. Verfahren nach einem der Ansprüche 1 bis 6,
wobei die Teilchen (b) auf mindestens einer Oberfläche der porösen Membran (a) vorhanden sind.

8. Verfahren nach einem der Ansprüche 1 bis 7,
wobei das mindestens eine zweite Polymer weiter Einheiten (IIa) mit einer zwitterionischen Einheit, Einheiten (IIb) mit einer Epoxygruppe, Einheiten (IIc) mit einer Hydroxygruppe, Einheiten (IId) mit einer Aminogruppe, Einheiten (IIe) mit einer Imidgruppe und/oder Einheiten (IIf) mit einer Carboxylgruppe einschließen.

9. Verfahren nach Anspruch 8,
worin
die Einheiten (IIa), (IIb), (IIc), (IId), (IIe) und (IIf) durch Polymerisieren eines Monomers, einschließend eine (Meth)acrylsäureeinheit und die zwitterionische Einheit, die Epoxygruppe, das Hydroxygruppe, die Aminogruppe, die Imidgruppe bzw. die Carboxylgruppe, gebildet werden.

10. Verfahren nach einem der Ansprüche 8-9,
wobei die zwitterionische Einheit eine Betaineinheit ist, vorzugsweise eine Sulfobetaineinheit.

## Revendications

1. Procédé de formation d'un système de membrane ayant la forme d'une feuille plate ou d'un tube, incluant
(a) une membrane poreuse formée d'au moins un premier polymère ; et
(b) des particules d'au moins un second polymère différent du premier polymère,
dans lequel la membrane poreuse (a) a les particules (b) immobilisées,
dans lequel l'au moins un second polymère inclut des unités (I) qui sont formées en polymérisant du N-vinylcaprolactame, et
le rapport pondéral des particules (b) est d'au plus 15 % en poids, basé sur le poids total de la membrane poreuse (a) et des particules (b), le rapport pondéral des particules (b) désignant le poids solide des particules (b) et étant déterminé par analyse thermogravimétrique,
ledit procédé comprenant les étapes consistant à
(i) fournir une solution polymère contenant l'au moins un premier polymère ;
(ii) fournir un bain de coagulation ;
(iii) fournir en option une solution d'alésage ;
(iv) mettre en forme la solution polymère en une forme prédéterminée d'une feuille plate ou d'un tube ; et
(v) immerger la solution polymère ayant la forme prédéterminée dans le bain de coagulation ;
pour coaguler la membrane poreuse (a) ayant les particules immobilisées (b) ;
dans lequel le bain de coagulation et/ou la solution d'alésage, le cas échéant, contient les particules (b) au moins au moment de l'étape (v).

2. Procédé selon la revendication 1,
dans lequel
une solution d'alésage est prévue,
à l'étape (iv), la solution polymère et la solution d'alésage sont mises en forme en la forme d'un tube qui est rempli de la solution d'alésage, et
les particules (b) sont contenues dans le bain de coagulation et/ou la solution d'alésage au moins au moment de l'étape (v).

3. Procédé selon la revendication 2,
dans lequel la solution d'alésage et/ou le bain de coagulation contient un précurseur des particules (b) et le précurseur est mis à réagir sur les particules (b) après que la solution d'alésage a été fournie à l'étape (iii), ou après que l'immersion dans le bain de coagulation a eu lieu à l'étape (v) de sorte que les particules (b) sont contenues dans la solution d'alésage et/ou le bain de coagulation au moment de l'étape (v).

4. Procédé selon la revendication 1, dans lequel aucune solution d'alésage n'est prévue, et
à l'étape (iv), la solution polymère est mise en forme en la forme d'une feuille plate, et
les particules ou précurseurs des particules (b) sont contenu(e)s dans le bain de coagulation.

5. Procédé selon l'une quelconque des revendications 1 à 4,
dans lequel les particules (b) ont un diamètre hydrodynamique de 20 nm à 2000 nm tel que déterminé par diffusion lumineuse dynamique.

6. Procédé selon l'une quelconque des revendications 1 à 5,
dans lequel les particules (b) sont des particules de gel.

7. Procédé selon l'une quelconque des revendications 1 à 6,
dans lequel les particules (b) sont présentes sur au moins une surface de la membrane poreuse (a).

8. Procédé selon l'une quelconque des revendications 1 à 7,
dans lequel l'au moins un second polymère inclut en outre des unités (IIa) ayant un groupe fonctionnel zwitterionique, des unités (IIb) ayant un groupe époxy, des unités (IIc) ayant un groupe hydroxy, des unités (IId) ayant un groupe amino, des unités (IIe) ayant un groupe imide, et/ou des unités (Ilf) ayant un groupe carboxyle.

9. Procédé selon la revendication 8,
dans lequel
les unités (IIa), (IIb), (IIc), (Ild), (Ile) et (IIf) sont formées en polymérisant un monomère incluant un groupe fonctionnel d'acide (méth)acrylique et le groupe fonctionnel zwitterionique, le groupe époxy, le groupe hydroxy, le groupe amino, le groupe imide et le groupe carboxyle, respectivement.

10. Procédé selon l'une quelconque des revendications 8 et 9,
dans lequel le groupe fonctionnel zwitterionique est un groupe fonctionnel de bétaïne, de préférence un groupe fonctionnel de sulfobétaïne.
